# EUROPEAN PATENT SPECIFICATION

(11) **EP 0 420 924 B1**
(45) Date of publication and mention of the grant of the patent: **15.05.1996**
(21) Application number: 89907791.1
(22) Date of filing: 20.06.1989
(51) Int. Cl.: B32B 15/08, B32B 27/08, B32B 3/02, E02D 31/00

(54) **BARRIER MEMBRANES E.G. FOR USE IN BUILDING**
MEMBRANBARRIERE, ZUM BEISPIEL ZUR VERWENDUNG BEIM BAUEN
MEMBRANES BARRIERES UTILISEES NOTAMMENT DANS LA CONSTRUCTION

(30) Priority: 20.06.1988 GB 8814621; 26.01.1989 GB 8901702
(43) Date of publication of application: 10.04.1991
(73) Proprietor: REXAM GRAPHICS LIMITED, Bristol BS16 3RY (GB)
(72) Inventor: FREEMAN, Michael, Ashley, Bristol (GB)
(74) Representative: Stuart, Ian Alexander
(86) International application number: GB8900690
(87) International publication number: WO8912551

(56) References cited:
- EP-A- 0 035 392
- GB-A- 2 122 133
- US-A- 3 725 185
- US-A- 4 224 367

## Description

The present invention relates to foundations incorporating barrier membranes. It is particularly concerned with barriers to gases, notably methane and radon.

There is growing awareness that methane may be generated in the ground beneath a building or other construction (particularly by decomposition of vegetable matter), and tend to seep up through the foundations. Accumulations, e.g. in cellars, can pose hazards. Furthermore, particularly in some areas of the country, radon may be a serious health risk. A conventional foundation comprises a porous bottom layer, e.g. of aggregate; an intermediate layer which may be of bitumen or of synthetic resin e.g. polythene (through which gases may be able to permeate); and a top layer of concrete, which may intrinsically have good barrier properties, but these are generally spoiled by the effects of cracks and joints. Thus the present invention seeks to provide a foundation with a gas barrier membrane which may be incorporated between the intermediate layer and the concrete (though it is not restricted to this position, nor to use in this type of foundation). Generally it will be arranged to allow gas to pass to the atmosphere, externally of the building interior. Membranes impermeable to liquids are well known, e.g. for damp-proof courses. One such membrane is polyethylene film with a layer of bitumen on one face. However, such liquid-proof barriers do not provide sufficient resistance to gases.

Thus the invention provides a foundation comprising an upper concrete layer, a lower layer, and a barrier membrane interposed between them; said membrane comprising a gas barrier layer (10;32) encapsulated in protective material (12,14,16;12',14',16';34,36,38,40) comprising plastics, the protective material covering the barrier layer (10;32) on both faces and at least a substantial part of the periphery; the protective material being bonded to substantially the entire surface of the barrier layer.

Aluminium may be used for the barrier layer as it has excellent barrier properties, even in the form of thin films, provided it is not so thin as to have an unacceptable incidence of pinholes. Thus it is preferably at least 12µm thick. Acceptable film of 18µm thickness can be reliably produced with less than 10 holes/m² though 25µm film is more realistic from the point of view of mass production. Gauges down to 12µm can be produced with not more than 50 holes/m² (for 95% of samples), whereas the corresponding figure for 9µm foil is typically about 500 holes/m². But aluminium foil is prone to corrosion by both acidic and alkaline reagents (and concrete has a high pH, e.g. pH 13). Furthermore, thin layers are mechanically weak. We have found that merely coating an aluminium foil on both faces with plastics material may not be sufficient, since it may still be open to attack at the edges. Therefore complete encapsulation is desirable, the plastics extending beyond the metal, at least at the major edges, suitably by at least 5mm and preferably by about 10mm.

In a preferred form, the aluminium is supported by a strengthening layer (e.g. of a polyester) on one or both faces, and the whole is encapsulated in a surrounding jacket, e.g. of a polyolefin, suitably by extrusion. Suitable polyolefins include polyethylene (including linear low or medium density polyethylene), polypropylene and polybutylene. The latter two are better gas barriers than polyethylene and tend to be stronger. If the encapsulating layers are strong enough, an internal strengthening layer may be unnecessary.

Polyesters also have gas barrier properties. However they are vulnerable to strongly alkaline conditions, so that it may be desirable for a polyester layer to have some protective coat.

Polyvinylidene chloride ("PVdC"), e.g. Saranex (trademark), is an example of another material with barrier properties that may supplement, or in some circumstances even replace, aluminium. Rather heavy coatings, e.g. up to 20g/m², preferably about 12g/m², may be used. They would generally be formed by application of a plurality of coating layers. Material with a 3gm/m² layer of PVdC is available, and this can be given one or more further coatings, eg giving a total of 15g/m². However there is a risk that a multilayer PVdC coating will suffer some delamination. Thus to ensure reliable maintenance of barrier properties, encapsulation is required, as for aluminium.

Another possible gas barrier is a thick (eg 100µm) layer of ethylene - vinyl alcohol ("EVOH"). However, EVOH is prone to absorb water, with serious degradation of its properties. Thus, again, encapsulation is required to produce a material that can withstand the rigours of the treatment it is likely to face during and prior to installation, and still give good barrier protection for many years.

A barrier layer may comprise aluminium deposited (eg by vapour deposition) on a strengthening layer. The strengthening layer, eg of polyethylene terephthalate ("PET") may also have gas barrier properties, thus permitting use of relatively thin aluminium. Barrier properties may also be enhanced by one or more further coatings of barrier materials, eg PVdC or EVOH.

Alternative materials for the outer layer(s) include lightweight PVC (preferably at least 20µm thick).

When aluminium is used in conjunction with one or more strengthening layers, the or each strengthening layer may be bonded to the aluminium using an adhesive, which may comprise a polyolefin extrusion. The adhesive layer or layers may extend beyond the aluminium at the sides. The resulting sandwich may then be encapsulated by extrusion coating a polyolefin layer on each face, the layers extending beyond the aluminium and bonding to the projecting adhesive layer. Extruded films tend to be thicker at the sides. It can thus be arranged that the thickened marginal portions of the extruded layers have, together, an additional thickness approximating to the thickness of the aluminium layer. Thus the membrane is of substantially uniform thickness throughout its width, since the lateral regions where there is no aluminium have instead the thicker encapsulating layers.

A simpler form of membrane has a strengthening layer at only one face. It is bonded to the aluminium by an extruded adhesive layer which extends beyond the aluminium. A further resin (e.g. polyolefin) layer is extruded on to the other face of the aluminium so as to extend beyond it, and to bond to the adhesive layer.

Membranes can also be produced by adhesive lamination.

A membrane may have a pair of strengthening layers at respective faces of the aluminium, each extending beyond it so that the strengthening layers can be adhered together.

A membrane for use in the invention may be provided on a reel, with any desired length. For convenience the width is quite small (e.g. 1 metre).

Strips of membrane may be coated with bitumen, preferably at least 1mm thick.

To provide a barrier in a foundation, bitumen-coated strips may be laid, bitumen side down, over the bottom layer of the foundation. Adjacent strips are overlapped and secured together with adhesive tape. Preferred tape comprises a strip of barrier membrane generally as described, having a layer of adhesive optionally protected by a release paper.

In a typical embodiment, an aluminium layer is bonded to a (or a respective) coextensive strengthening layer of polyester on one or both of its faces, and the aluminium/polyester composite is encapsulated between polyolefin (eg polyethylene) films, or a polyolefin film on one side and bitumen on the other. The encapsulating films extend laterally beyond the composite. They are bonded to the composite over substantially all of its surface area, and to each other at the projecting margins. Polyethylene is easily extendible while aluminium is not. Thus if it were not for the strengthening material, there would be a risk of damage. Encapsulation with bonding over the whole surface is much safer than merely seaming the encapsulating films together at their edges.

Some embodiments of the invention will now be described in greater detail with reference to the accompanying drawings, in which:
Fig. 1 is a schematic section through a first example of a membrane usable in the invention;
Fig. 2 is a like view of a second membrane; and
Fig. 3 is a like view of a third membrane which is adhesive tape.

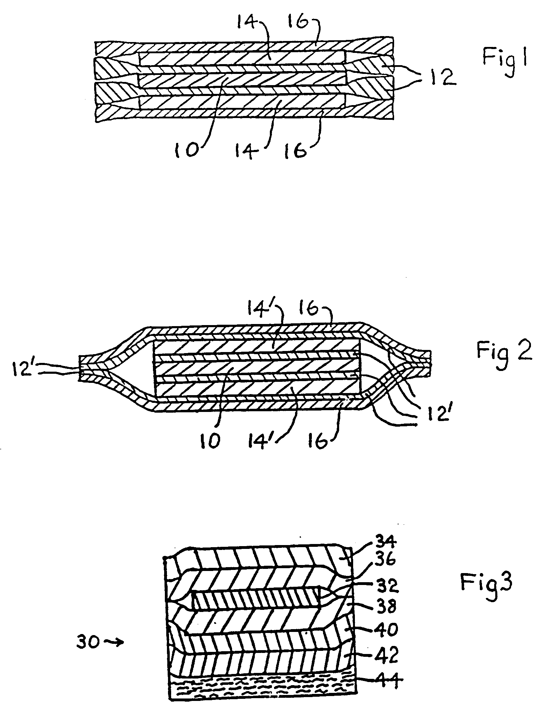

The membrane shown in Fig. 1 is in the form of an elongate strip of width 1 metre, shown in transverse section. An aluminium foil 10 (e.g. of thickness 19µm) bears on each face an extruded layer 12 of polyethylene serving as adhesive, which projects laterally beyond the aluminium 10. These secure respective strengthening layers 14 of polyester (e.g. P.E.T., polyethylene terephthalate) suitably of thickness 12-24µm. These are of lesser lateral extent than the adhesive layers 12, which are thus exposed at the edges. The strengthening layers have some gas barrier properties, and thus allow the use of relatively thin aluminium, since more pinholes can be tolerated. Finally, there are extruded layers of polyolefin 16 which project laterally at least as much as the adhesive layers 12, and are bonded to them.

Suitable polyolefin materials are based on polyethylene, polypropylene, or copolymers.

Fig. 2 shows a membrane produced by adhesive lamination. When using this technique rather than extrusion lamination, it is not practicable to extend the adhesive laterally beyond the substrate. Thus for example a 2-part curing adhesive 12' (e.g. polyurethane-based) is applied to one or both faces of the aluminium 10, and a strengthening layer 14' of the same width as the aluminium 10 is applied to the or each coated face. At least one face is then adhesively adhered by a further layer of adhesive 12' to a web 16 of polyolefin, e.g. polyethylene, which extends laterally beyond the aluminium etc. If there is polyethylene on each face, the lateral portions of the two polyethylene webs are mutually adhered to achieve encapsulation. If there is polyethylene at only one face, encapsulation may rely on the application of bitumen to the other face.

In a related embodiment, the aluminium layer is adhered (by a two-part polyurethane adhesive) on one face to polyethylene and on the other face to polyester, the two polymer layers being wider than the aluminium, their projecting margins being adhered to one another. Subsequently the exposed face of the polyester is coated with bitumen.

Fig. 3 shows an adhesive tape 30 which is a strip of barrier membrane having many similarities to those just described, though of course it is generally produced in smaller widths. The tape 30 has a barrier layer 32 of metal foil encapsulated with plastics layers 34, 36, 38, 40 which extend beyond each lateral side of the foil 32 by at least 5mm and preferably at least 7mm and are bonded together so that the foil is fully protected (except at the ends, where the tape is likely to be cut). At one face there is a layer of adhesive 42, protected by a release paper 44. Details of suitable layers are given below

| Layer | Thickness µm | Material |
|---|---|---|
| 32 | 18 | Aluminium |
| 34 | 23 | Film(e.g.Polyester, suitably Melinex 800 (trademark)) |
| 36 | 25 | Resin(e.g.Polyethylene 30gsm) |
| 38 | 25 | Resin(e.g.Polyethylene 30gsm) |
| 40 | 50 | Film (e.g. Polyethylene) |
| 42 | 20 | Adhesive |
| 44 | | Release paper |

Layer 40 is optional and could be replaced by an ethylene copolymer or omitted.

Such a tape may be made by extrusion lamination. The process may be as follows:
1st pass: the Melinex 800 is key coated (in line) and extrusion laminated with strips of aluminium foil, using molten resin (layer 36). Generally a sheet of material is produced, with a multiplicity of aluminium strips spaced 10-20mm apart.
2nd pass: a preformed sheet to constitute the thick layer film (40) is extrusion laminated over the foil strips using molten resin (layer 38).
3rd pass: adhesive (42) and release paper (44) are applied.
4th pass: the sheet is slit into strips each containing a single encapsulated aluminium strip. The sheet strips are reeled.

Polyethylene is heat extendible to a marked degree. Thus if the polyester layer 34 were replaced by another polyethylene, the product would crease and crinkle seriously on cooling. Indeed, the second and subsequent passes might be impossible. This could be avoided by employing adhesive lamination instead of extrusion lamination. However, the step of applying spaced aluminium strips to an adhesive-coated preceding layer 36 would tend to be messy owing to the gaps where adhesive would remain exposed.

Strips of membrane e.g. as shown in Figs 1 and 2 can be connected by means of tape as shown in Fig. 3 to produce a composite membrane with excellent barrier properties and resistance to corrosion.

## Claims

1. A foundation comprising an upper concrete layer, a lower layer, and a barrier membrane interposed between them; said membrane comprising a gas barrier layer (10;32) encapsulated in protective material (12,14,16;12',14',16;34,36,38,40) comprising plastics, the protective material covering the barrier layer (10;32) on both faces and at least a substantial part of the periphery; the protective material being bonded to substantially the entire surface of the barrier layer.

2. A foundation according to claim 1 wherein the gas barrier layer (10;32) has encapsulating layers (12,16;12',16;36,38) of polyolefin or polyvinyl chloride.

3. A foundation according to claim 1 or claim 2 wherein the protective material (12,16;12',16;34-40) from the two faces extends beyond the barrier layer (10;32) by at least 5mm over at least a substantial part of the periphery, the material (12,12';36) from one face being connected to material (12;12';38) from the other face.

4. A foundation according to any preceding claim wherein the barrier layer (10;32) comprises aluminium.

5. A foundation according to claim 4 wherein the aluminium (10) is at leat 12µm thick.

6. A foundation according to claim 4 or 5 wherein the aluminium (10;32) is supported by a strengthening layer (14;14';34) on one or both faces.

7. A foundation according to claim 6 wherein the or a said strengthening layer (14;14'34) is of a polyester material.

8. A foundation according to claim 6 or 7 wherein the aluminium (10) and strengthening layer(s) are encapsulated in a surrounding jacket (16;12'16).

9. A foundation according to claim 8 wherein the membrane has encapsulating layers (12,16;12'16) of polyolefin or polyvinyl chloride which encapsulate both the barrier layer (10) and the strengthening layer or layers (14;14').

10. A foundation according to claim 9 wherein the or each strengthening layer (14) is bonded to the aluminium (10) using an adhesive (12) comprising a polyolefin extrusion, and wherein the adhesive layer or layers (12) extends beyond the aluminium at the sides, and the resulting sandwich is encapsulated by extrusion coating a polyolefin layer (16) on each face, the layers extending beyond the aluminium and bonding to the projecting adhesive layer or layers.

11. A foundation according to any preceding claim wherein the barrier membrane has an external layer of bitumen.

12. A foundation according to any preceding claim in which the barrier membrane is in the form of at least one elongate strip, the encapsulating material covering the lateral edges of the aluminium layer (10).

13. A foundation according to claim 12 in which the barrier membrane is formed of a plurality of said elongate strips, and adjacent portions are connected by means of adhesive tape (30) which is also formed as a barrier membrane comprising a gas barrier layer (10;32) encapsulated in protective material (12,14,16;12', 14',16;34,36,38,40) comprising plastics, the protective material covering the barrier layer (10;32) on both faces and at least a substantial part of the periphery; the protective material being bonded to substantially the entire surface of the barrier layer; said adhesive tape (30) having a layer of adhesive (42) optionally protected by a release paper (44).

## Patentansprüche

1. Fundament, umfassend eine obere Betonschicht, eine untere Schicht und eine zwischen diesen angeordnete Membranbarriere; wobei die Membran eine Gasbarriereschicht (10;32) umfaßt, die in Kunststoff umfassendes Schutzmaterial (12,14,16;12',14',16;34,36,38,40) eingeschlossen ist, wobei das Schutzmaterial die Barriereschicht (10;32) an beiden Stirnflächen und an zumindest einem wesentlichen Teil der Peripherie bedeckt; wobei das Schutzmaterial im wesentlichen mit der gesamten Oberfläche der Barriereschicht verbunden ist.

2. Fundament nach Anspruch 1, worin die Gasbarriereschicht (10;32) Finschlußschichten (12,16;12',16;36,38) aus Polyolefin oder Polyvinylchlorid aufweist.

3. Fundament nach Anspruch 1 oder 2, worin sich das Schutzmaterial (12,16;12',16;34-40) von den beiden Stirnflächen um zumindest 5 mm über die Barriereschicht (10;32) hinaus über zumindest einen wesentlichen Teil der Peripherie erstreckt, wobei das Material (12,12';36) von einer Stirnfläche mit Material (12;12';38) von der anderen Stirnfläche verbunden ist.

4. Fundament nach einem der vorangegangenen Ansprüche, worin die Barriereschicht (10;32) Aluminium umfaßt.

5. Fundament nach Anspruch 4, worin das Aluminium (10) zumindest 12µm dick ist.

6. Fundament nach Anspruch 4 oder 5, worin das Aluminium (10;32) von einer Verstärkungsschicht (14;14';34) an einer oder beiden Stirnflächen gestützt wird.

7. Fundament nach Anspruch 6, worin die oder eine Verstärkungsschicht (14;14;34) aus einem Polyestermaterial besteht.

8. Fundament nach Anspruch 6 oder 7, worin das Aluminium (10) und die Verstärkungsschicht(en) in einem Umhüllungsmantel (16;12;16) eingeschlossen sind.

9. Fundament nach Anspruch 8, worin die Membran Einschlußschichten (12,16;12;16) aus Polyolefin oder Polyvinylchlorid aufweist, die sowohl die Barriereschicht (10) als auch die Verstärkungsschicht oder -schichten (14;14') einschließen.

10. Fundament nach Anspruch 9, worin die oder jede Verstärkungsschicht (14) unter Verwendung eines Klebers (12) mit dem Aluminium (10) verbunden ist, der eine Polyolefinextrusion umfaßt, und worin sich die Kleberschicht oder -schichten (12) an den Seiten über das Aluminium hinaus erstreckt/erstrecken und die resultierende Sandwichanordnung durch Extrusionsbeschichtung mit einer Polyolefinschicht (16) auf jeder Stirnfläche eingeschlossen ist, wobei sich die Schichten über das Aluminium hinaus erstrecken und mit der/den vorspringenden Kleberschicht oder -schichten verbunden sind.

11. Fundament nach einem der vorangegangenen Ansprüche, worin die Membranbarriere eine Außenschicht aus Bitumen aufweist.

12. Fundament nach einem der vorangegangenen Ansprüche, bei dem die Membranbarriere in Form zumindest eines länglichen Streifens vorliegt, wobei das Einschlußmaterial die Seitenränder der Aluminiumschicht (10) bedeckt.

13. Fundament nach Anspruch 12, bei dem die Membranbarriere aus einer Vielzahl der länglichen Streifen gebildet ist und aneinandergrenzende Abschnitte durch Klebeband (30) verbunden sind, das ebenfalls als Membranbarriere ausgebildet ist, die eine in Kunststoff umfassendes Schutzmaterial (12,14,16;12',14',16;34,36,38,40) eingeschlossene Gasbarriereschicht (10;32) umfaßt, wobei das Schutzmaterial die Barriereschicht (10;32) an beiden Stirnflächen und zumindest einem wesentlichen Teil der Peripherie bedeckt; wobei das Schutzmaterial im wesentlichen mit der gesamten Oberfläche der Barriereschicht verbunden ist; wobei das Klebeband (30) eine Kleberschicht (42) aufweist, die wahlweise von einem Trenn- bzw. Schutzschichtpapier (44) geschützt ist.

## Revendications

1. Fondation comprenant une couche de béton supérieure, une couche inférieure, et une membrane barrière interposée entre elles; ladite membrane comprenant une couche barrière au gaz (10; 32) encapsulée dans un matériau protecteur (12, 14, 16; 12', 14', 16; 34, 36, 38, 40) comprenant des plastiques, le matériau protecteur couvrant la couche barrière (10;32) sur les deux faces et au moins une partie substantielle de la périphérie; le matériau protecteur étant lié à substantiellement la surface entière de la couche barrière.

2. Fondation selon la revendication 1 dans laquelle la couche barrière au gaz (10;32) a des couches d'encapsulation (12, 16; 12', 16; 36, 38) de polyoléfine ou de polychlorure de vinyle.

3. Fondation selon la revendication 1 ou 2 dans laquelle le matériau protecteur (12, 16; 12', 16; 34-40) des deux faces s'étend vers l'arrière de la couche barrière (10;32) d'au moins 5 mm sur au moins une partie substantielle de la périphérie, le matériau (12; 12'; 36) d'une face étant connecté au matériau (12; 12'; 38) de l'autre face.

4. Fondation selon l'une quelconque des revendications précédentes dans laquelle la couche barrière (10;32) comprend de l'aluminium.

5. Fondation selon la revendication 4 dans laquelle l'aluminium (10) a au moins 12 µm d'épaisseur.

6. Fondation selon la revendication 4 ou 5 dans laquelle l'aluminium (10;32) est supporté par une couche de renforcement (14; 14'; 34) sur une ou les deux faces.

7. Fondation selon la revendication 6 dans laquelle la ou une dite couche de renforcement (14; 14', 34) est un matériau de polyester.

8. Fondation selon la revendication 6 ou 7 dans laquelle l'aluminium (10) et une (des) couche(s) de renforcement est(sont) encapsulée(s) dans une chemise d'entourage (16;12'16).

9. Fondation selon la revendication 8 dans laquelle la membrane a deux couches d'encapsulation (12,16;12'16) de polyoléfine ou de polychlorure de vinyle qui encapsulent à la fois la couche barrière (10) et la couche de renforcement ou les couches de renforcement (14, 14').

10. Fondation selon la revendication 9 dans laquelle la ou chaque couche de renforcement (14) est liée à l'aluminium (10) en utilisant un adhésif (12) comprenant une extrusion de polyoléfine, et où la couche adhésive ou les couches adhésives (12) s'étende(nt) derrière l'aluminium sur les côtés, et le sandwich résultant est encapsulé par revêtement par extrusion d'une couche de polyoléfine (16) sur chaque face, les couches s'étendant derrière l'aluminium et se liant à la (les) couche(s) adhésive(s) en projection.

11. Fondation selon l'une quelconque des revendications précédentes dans laquelle la membrane barrière a une couche externe de bitume.

12. Fondation selon l'une quelconque des revendications précédentes dans laquelle la membrane barrière est sous la forme d'au moins une bande allongée, le matériau d'encapsulation couvrant les bords latéraux de la couche d'aluminium (10).

13. Fondation selon la revendication 12 dans laquelle la membrane barrière est formée d'une pluralité desdites bandes allongées, et les portions adjacentes sont connectées au moyen d'une bande adhésive (30) qui est également formée comme une membrane barrière comprenant une couche barrière au gaz (10;32) encapsulée dans le matériau protecteur (12,14,16;12',14',16;34,36,38,40) comprenant des plastiques, le matériau protecteur couvrant la couche barrière (10;32) sur les deux faces et au moins une partie substantielle de la périphérie; le matériau protecteur étant lié à substantiellement la surface entière de la couche barrière; ladite bande adhésive (30) ayant une couche d'adhésif (42) optionnellement protégée par un papier de libération (44).
